Europäisches Patentamt

European Patent Office

Office européen des brevets

(11) Veröffentlichungsnummer: **0 308 648 B1**

## EUROPÄISCHE PATENTSCHRIFT

(45) Veröffentlichungstag der Patentschrift: **29.07.92**

(51) Int. Cl.⁵: **H02M 3/335**

(21) Anmeldenummer: **88113302.9**

(22) Anmeldetag: **17.08.88**

(54) Schaltungsanordnung für ein geregeltes Schaltnetzteil.

(30) Priorität: **19.09.87 DE 3731644**

(43) Veröffentlichungstag der Anmeldung:
**29.03.89 Patentblatt 89/13**

(45) Bekanntmachung des Hinweises auf die
Patenterteilung:
**29.07.92 Patentblatt 92/31**

(84) Benannte Vertragsstaaten:
**AT BE CH DE ES FR GB GR IT LI LU NL SE**

(56) Entgegenhaltungen:
**EP-A- 0 096 300**
**DE-A- 3 518 675**

**PATENT ABSTRACTS OF JAPAN, Band 7, Nr.
42 (P-177)[1187], 19. Februar 1983, Seite 112
P 177; & JP-A-57 193 820**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Hartmann, Uwe
Passauerstrasse 49
W-8391 Untergriesbach(DE)**
Erfinder: **Mai, Udo
Obernederring 7
W-8391 Untergriesbach(DE)**

## Beschreibung

Die Erfindung betrifft eine Schaltungsanordnung für ein geregeltes Schaltnetzteil, bei welchem eine Sekundärspannung durch Verändern der den Schalter des Schaltnezteils ansteuernden Impulse geregelt wird zur Erzeugung einer oder mehrerer Niedervolt-Sekundärspannungen, wie sie beispielsweise aus der DE-A-3 518 675 bekannt geworden ist.

In elektronischen Geräten, insbesondere in Fernsehempfängern werden in zunehmendem Maße Schaltnetzteile verwendet, die besonders wirtschaftlich arbeiten. Diese Schaltnetzteile sind geregelt, indem eine hohe Betriebsspannung, zumeist die Betriebsspannung für die Zeilenendstufe, konstant gehalten wird. Die Regelung dieser Betriebsspannung erfolgt durch einen auf der Sekundärseite stattfindenden Sollwertvergleich, dessen Ergebnis auf die Primärseite des Schaltnetzteils übertragen einem Impulsbreiten-Modulator zugeführt wird, der die Ansteuerimpulse für den elektronischen Schalter des Schaltnetzteils liefert. Da hierbei nur die genannte höhere Betriebsspannung geregelt wird, müssen die Niedervolt-Spannungen zusätzlich geregelt werden. Diese Regelung wird meist mit teueren und mit Verlusten behafteten Längsreglern erreicht. Die Niedervoltspannungen müssen deswegen sehr stabil sein, weil die unterschiedlichen Betriebsspannungen eines Fernsehempfängers sehr verschiedene Stromentnahmen zulassen und die an diese Betriebsspannungen angeschlossenen Baugruppen nur sehr geringe Betriebstoleranzen erlauben.

Der Erfindung liegt die Aufgabe zugrunde, eine Stabilisierung auch dieser Niedervolt-Spannungen unter Einsparung von Kosten bei gleichzeitiger Verringerung der Verlustleistung zu ermöglichen. Diese Aufgabe wird durch die im Patentanspruch angegebene Merkmale gelöst. Weitere vorteilhafte Ausgestaltungen der Erfindung ergeben sich aus den Unteransprüchen.

Nachfolgend wird das Wesentliche der Erfindung an einem Ausführungsbeispiel mit Hilfe der Zeichnung beschrieben.

Figur 1 zeigt ein Schaltbild der Erfindung

Figur 2 zeigt Diagramme zur Erläuterung der Wirkungsweise der Schaltung nach Figur 1.

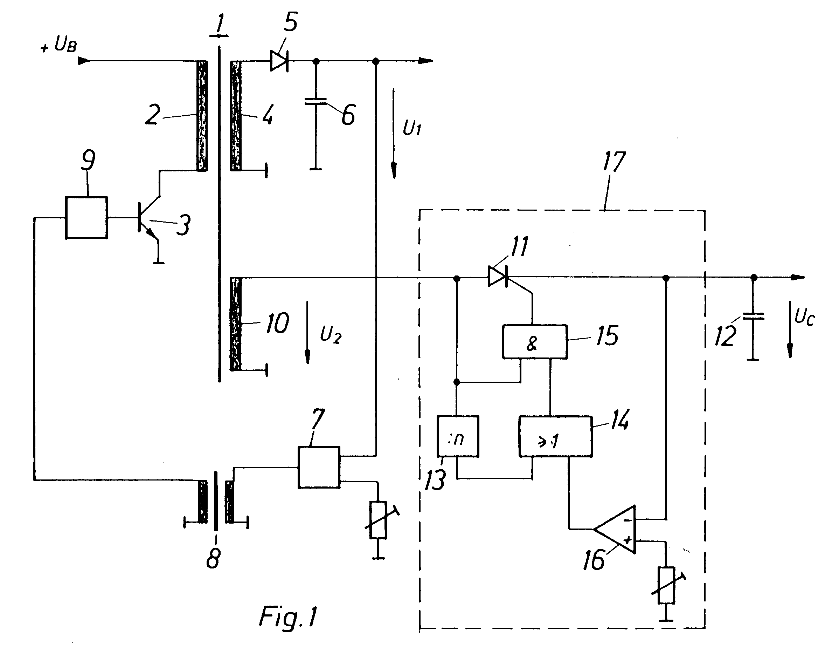

In Figur 1 ist der wesentliche Aufbau eines bekannten Schaltnetzteils dargestellt, das einen Schaltnetzteiltransformator 1 besitzt. Eine Primärwicklung 2 liegt einerseits an einer gleichgerichteten ungeregelten Betriebsspannung UB und wird andererseits über einen elektronischen Schalter 3 periodisch nach Masse geschaltet. Die Regelung einer stabilisierten Gleichspannung U1, die über eine Sekundärwicklung 4 und einen Gleichrichter 5 an einem Ladekondensator 6 entsteht, erfolgt über eine Sollwertvergleichsstufe 7, deren Ausgangssignal über ein netztrennendes Koppelglied 8 an die primärseitig angeordnete Steuerschaltung 9 gelangt, welche die Breite des Ansteuerimpulses für den elektronischen Schalter 3 verändert.

Nachstehend wird beschrieben, wie eine sekundärseitige Niedervoltspannung Uc (z.B. 5 Volt) geregelt wird. Hierzu wird an die die Niedervolt-Spannung liefernde Sekundärwicklung 10 des Schaltnetzteiltransformators 1 ein steuerbarer Schalter, z.B. ein Thyristor 11, gelegt, welcher einen Ladekondensator 12 auflädt. Die Aufladung erfolgt in Abhängigkeit von Belastungsschwankungen sowie Änderungen der an der Sekudärwicklung 10 stehenden Spannung U2. Die Ansteuerung des Thyristors 11 erfolgt nach einer Frequenzteilung in einem Teiler 13, der an der Sekundärwicklung 10 anliegenden Wechselspannung U2. Die geteilte Frequenz gelangt über eine ODER-Verknüpfung 14 an eine UND-Verknüpfung 15, an deren anderen Eingang die ungeteilt Frequenz der Spannung U2 liegt. In Abhängigkeit von der Belastung, d.h. in Abhängigkeit von der Gleichspannung Uc am Kondensator 12 wird der Thyristor 11 früher oder später gezündet. Im Stand-by-Betrieb, wenn die Spannung Uc wenig belastet ist, sei der Teilungsfaktor n des Frequenzteilers 13 so eingestellt, daß nur jede vierte Periode der Wechselspannung U2 die Zündung des Thyristors 11 veranlaßt.

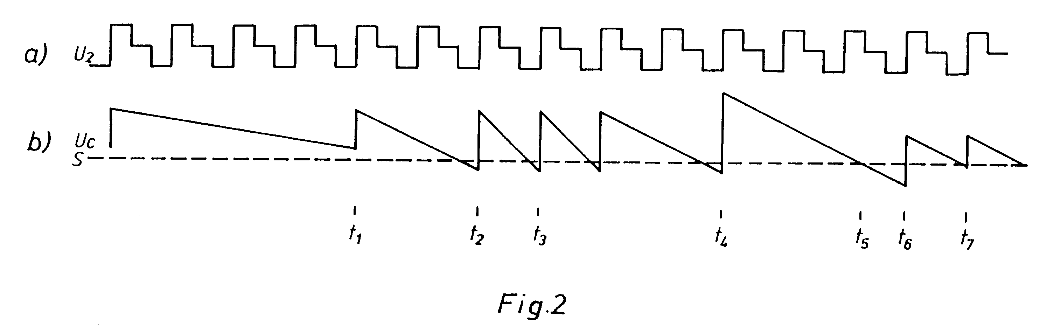

In Figur 2 ist bei a der Verlauf der Wechselspannung U2 im Prinzip dargestellt. Am Ende der vierten Periode gelangt ein Impuls über die Verknüpfungen 14 und 15 an die Steuerelektrode des Thyristors 11. Zum Zeitpunkt t1 wird der Kondensator 12 nachgeladen (b). Stellt der Komparator 16 eine etwas höhere Belastung dadurch fest, daß die Ist-Spannung unter einen vorgegebenen Sollwert S sinkt, wird der Thyristor 11 schon früher gezündet, z.B. zum Zeitpunkt t2. Bei noch größerer Belastung wird die Komparatorschwelle S noch eher erreicht, so daß ab Zeitpunkt t3 z.B. jede Periode der Spannung U2 den Thyristor 11 zündet.

Es kann auch vorkommen, daß bei einer mittleren Belastung der Spannung Uc die Spannung U2 ansteigt oder abfällt. Dies ist z.B. bei Netz-spannungsschwankungen der Fall. Auch hier wird der Thyristor 11 abhängig davon früher oder später gezündet. Steigt z.B. die Spannung U2 an (t4), so wird bei dieser mittleren Belastung die Komparatorschwelle S erst später erreicht (t5), so daß der Kondensator 12 erst nach z.B. vier Perioden nachgeladen wird. Ist die Spannung geringer (t6) wird die Komparatorschwelle S früher erreicht (t7), so daß z.B. der Kondensator 12 bei jeder Periode nachgeladen wird. Es ist zweckmäßig, den Teilungsfaktor n des Frequenzteilers 13 so zu legen, daß die geteilte Frequenz der Spannung U2 noch oberhalb der Hörgrenze liegt. Bei einer Schalt-netzteilfrequenz von 64 KHz wählt man n = 4.

Die zuvor beschriebene Schaltungsanordnung eignet sich zur Integration, indem der Thyristor 11 und dessen Ansteuerschaltung zu einer Schaltung 17 zusammengefaßt werden, wie dies durch die Umrandung angedeutet ist.

**Patentansprüche**

1. Schaltungsanordnung für ein geregeltes Schaltnetzteil mit einem Transformator (1), dessen Primärwicklung (2) mit ihrem einen Ende an eine Gleichspannung (+UB) gelegt ist und deren anderes Ende über einen getakteten Schalter (3) periodisch auf Bezugspotential geschaltet wird und mit mindestens zwei Sekundärwicklungen (4, 10) zur Erzeugung von netzgetrennten, sekundären Betriebsgleichspannungen (U1, U2), wobei eine Sekundärwicklung (10) über einen mit dem primärseitigen Schalter (3) synchron getakteten Schalter (11) Ladeimpulse auf einen Ladekondensator (12) gibt, an welchem eine netzgetrennte geregelte Betriebsgleichspannung (Uc) abnehmbar ist, **dadurch gekennzeichnet,** daß eine Einrichtung (17) vorgesehen ist, die die Anzahl der Ladeimpulse durch Herunterteilen der Ansteuerimpulse für den Schalter (11) über eine Teilerstufe (13) verringert, und daß eine die erzeugte Sekundärspannung (Uc) am Ladekondensator (12) messende Einrichtung (16) vorgesehen ist, die diese Spannung (Uc) mit einer vorgegebenen Sollspannung (S) vergleicht, und daß bei Unterschreiten dieser Sollspannung (S) die Ansteuerung des Schalters (11) unter Umgehung der Teilerstufe (13) zu einem früheren Zeitpunkt erfolgt, als er sich durch die Teilerstufe (13) ergibt.

2. Schaltungsanordnung nach Anspruch 1, **dadurch gekennzeichnet,** daß der elektrische Schalter (11) aus einem Thyristor besteht.

3. Schaltungsanordnung nach Anspruch 1, **dadurch gekennzeichnet,** daß der Teilungsfaktor (n) der Teilerstufe (13) derart gewählt ist, daß die tiefste sich einstellende Frequenz der Ansteuersignale für den Schalter (11) oberhalb des Hörbereichs liegt.

4. Schaltungsanordnung nach den Ansprüchen 1, 2, oder 3, **dadurch gekennzeichnet,** daß die Einrichtung (17) in einer integrierten Schaltung zusammengefaßt ist.

**Claims**

1. Circuit arrangement for a regulated switched power supply having a transformer (1) whose primary winding (2) is connected at one end to a direct voltage (+UB) and whose other end is periodically connected to a reference potential via a cyclically actuated switch (3) and having at least two secondary windings (4, 10) for the production of mains isolated, secondary direct operating voltages (U1, U2), wherein one secondary winding (10) supplies charging pulses via a switch (11) which is cyclically actuated in synchronism with the switch (3) on the primary side to a storage capacitor (12) from which a mains isolated, regulated direct operating voltage (Uc) is derivable, characterised in that, a device (17) is provided which decreases the number of the charging pulses by subdivision of the control pulses for the switch (11) by means of a divider stage (13), and that a device (16) is provided which measures the secondary voltage (Uc) produced on the storage capacitor (12) and compares this voltage (Uc) with a predetermined reference value (S), and that upon falling below this reference value (S), the control of the switch (11) is effected at an earlier time point than that dictated by the divider stage (13) by by-passing the divider stage (13).

2. Switching arrangement according to Claim 1, characterised in that, the electrical switch (11) comprises a thyristor.

3. Switching arrangement according to Claim 1, characterised in that, the division factor (n) of the divider stage (13) is selected such that the lowest occurring frequency of the control signal for the switch (11) lies above the audible range.

4. Switching arrangement according to Claims 1, 2, or 3, characterised in that, the device (17) is comprised in an integrated circuit.

**Revendications**

1. Dispositif de circuit pour un bloc d'alimentation et de commutation réglé avec un transformateur (1) dont l'enroulement primaire (2) est appliqué avec l'une de ses extrémités à une tension continue (+UB) et dont l'autre extrémité est commutée périodiquement sur potentiel de référence par un commutateur (3) synchronisé et avec au moins deux enroulements secondaires (4, 10) pour produire des tensions de fonctionnement continues secondaires séparées du secteur (U1, U2), un enroulement secondaire (10) délivrant, par un commutateur (11) synchronisé de manière synchrone avec le commutateur côté primaire (3) des impulsions de charge à un condensateur de lissage (12) sur lequel une tension de fonctionnement continue réglée séparée du secteur (Uc) peut être prélevée, **caractérisé en ce** qu'il est prévu un dispositif (17) qui réduit le nombre des impulsions de charge en divisant les impulsions de commande pour le commutateur (11) par un étage diviseur (13) et qu'il est prévu un dispositif (16) qui mesure la tension secondaire (Uc) produite sur le condensateur de lissage (12), dispositif qui compare cette tension (Uc) à une tension de consigne prédéterminée (S) et que, lorsque cette tension de consigne (S) n'est pas atteinte, la commande du commutateur (11) est effectuée, en évitant l'étage diviseur (13), à un moment plus tôt que celui qui résulte de l'étage diviseur (13).

2.   Dispositif de circuit selon la revendication 1, **caractérisé en ce** que le commutateur électrique (11) est constitué par un thyristor.

3.   Dispositif de circuit selon la revendication 1, **caractérisé en ce** que le facteur de division (n) de l'étage diviseur (13) est sélectionné de telle manière que la fréquence des signaux de commande pour le commutateur (11) la plus basse qui se règle se situe au-dessus de la gamme audible.

4.   Dispositif de circuit selon les revendications 1, 2 ou 3, **caractérisé en ce** que le dispositif (17) est réuni en un circuit intégré.

Fig.1

Fig.2

a) $U_2$

b) $U_C$
S

$t_1$ $t_2$ $t_3$ $t_4$ $t_5$ $t_6$ $t_7$

EP 0 308 648 B1